## Europäisches Patentamt
## European Patent Office
## Office européen des brevets

(11) Veröffentlichungsnummer: **0 109 054**
**B1**

(12) **EUROPÄISCHE PATENTSCHRIFT**

(45) Veröffentlichungstag der Patentschrift:
03.02.88

(21) Anmeldenummer: 83111210.7

(22) Anmeldetag: 10.11.83

(51) Int. Cl.⁴: **G 02 C 5/12**

(54) Brille und Verfahren zum Anpassen einer Brille.

(30) Priorität: 10.11.82 DE 3241455

(43) Veröffentlichungstag der Anmeldung:
23.05.84 Patentblatt 84/21

(45) Bekanntmachung des Hinweises auf die Patenterteilung:
03.02.88 Patentblatt 88/5

(84) Benannte Vertragsstaaten:
AT BE CH FR GB IT LI LU NL SE

(56) Entgegenhaltungen:
BE-A-894 660
DE-A-3 130 144
US-A-2 949 638
US-A-3 597 053
US-A-3 701 592

(73) Patentinhaber: **Frey, Peter, Poststrasse 6, D-4250 Bottrop (DE)**
Patentinhaber: **Kellner, Hans- Jurgen, Dieselstrasse 6, D-4200 Oberhausen (DE)**

(72) Erfinder: **Frey, Peter, Poststrasse 6, D-4250 Bottrop (DE)**
Erfinder: **Kellner, Hans- Jurgen, Dieselstrasse 6, D-4200 Oberhausen (DE)**

(74) Vertreter: **Radünz, Ingo, Dipl.- Ing., Eduard- Schloemann- Strasse 47, D-4000 Düsseldorf 1 (DE)**

## Beschreibung

Die Erfindung betrifft ein Verfahren zum Anpassen einer Brille an die Nasenform einer Person nach dem Oberbegriff des Anspruches 1.

Bei jedem Träger einer Brille muß die Nase fast das gesamte Gewicht dieser Brille aufnehmen. Eine Gewichtsentlastung bringt lediglich die Zugkraft der Brillenbügel nach hinten. Die Entlastung liegt jedoch, je nach individueller Einstellung der Brillenbügelenden an die Anatomie hinter dem Ohr, bei höchstens 10 %. Die Gewichtverteilung auf der Nase ist daher von größter Bedeutung. Eine größtmögliche Auflagefläche bringt die günstigste Druckverteilung, also den geringsten Druck auf die belastete Fläche.

Normalerweise bedeutet eine gut angepaßte Brille in der richtigen Größe mit normal bis mittelstarken Korrektionsgläsern für den Optiker und den Brillenträger kein Problem. Dem Optiker stehen Brillen in den verschiedensten Materialien, Formen, Größen und Ausstattungen zur Verfügung, so daß bei fachgerechter Auswahl, Fertigung und Anpassung der Brillenträger mit dem Sitz seiner Brille zufrieden ist.

Bei der Versorgung von Fehlsichtigen mit Brillen gibt es jedoch auch Problemfälle, welche mit normalen Brillen nicht, oder nicht zufriedenstellend gelöst werden können. Solche Problemfälle resultieren einmal aus dem Gewicht der Brille. Starke Brillengläser, besonders Plus-Gläser weisen ein hohes Eigengewicht auf. Das gilt in besonderem Maße für die Brille für Star-Operierte, weil diese Brillen wegen des in der Regel extrem starken Plusbereiches verhältnismäßig schwer sind. Nicht immer sind in solchen Fällen Kunststoffgläser angebracht, da ihnen die Kratzempfindlichkeit oder das Fehlen phototroper Eigenschaften entgegenstehen. Moderne, große Brillenfassungen nehmen viel Glasmasse auf, so daß auch in diesem Fall das Brillengewicht entsprechend hoch ist. Weitere Schwierigkeiten ergeben sich aus Nasen- und Gesichtsanomalien bzw. aus einem anatomisch ungünstig ausgebildeten Gesicht zum Tragen einer Brille. Hierzu gehören flache oder steile Nasenrücken, Nasenrücken fast ohne Muskelfleisch, Nasen, die nach einem Unfall und einer Operation verbildet sind, Nasen, die im oberen Bereich nicht ausgebildet sind, starke und im oberen Bereich zu dicke Nasen sowie eine starke Ausbildung der Wangen in Verbindung mit einer kleinen Nase. Schließlich ist eine extreme allgemeine Druckempfindlichkeit der Haut zu beachten.

Ein gattungsgemäßes Verfahren zur Anpassung einer Brille ist aus der US-A-3 597 053 bekannt. Bei diesem Verfahren wird die zusätzliche, der Nasenform anzupassende Lage auf den Nasensteg der Brille aufgeklebt. Der für die Bildung der zusätzlichen Lage verwendete Werkstoff dient gleichzeitig als Abformmasse. Diese Masse ist ein aushärtbarer Kunststoff, der bei leicht erhöhter Temperatur formbar ist. Die auf die Verformungstemperatur erwärmte Masse wird mit der Brille auf die Haut des Patienten gedrückt, was von diesem als unangenehm empfunden wird und Reizungen auf der Haut hervorrufen kann.

Der Erfindung liegt die Aufgabe zugrunde, ein Verfahren zur Anpassung einer Brille an die Nasenform des Brillenträgers anzugeben, mit deren Hilfe auch unter ungünstigen Bedingungen ein guter Sitz der Brille auf der Nase des Brillenträgers zu erzielen ist.

Diese Aufgabe wird erfindungsgemäß durch die Merkmale des Anspruches 1 gelöst. Vorteilhafte Ausgestaltungen der Erfindung sind in den Ansprüchen 2 bis 4 enthalten.

Nach dem erfindungsgemäßen Verfahren wird ein Abdruck der Nase des Brillenträgers hergestellt und dieser Abdruck formgetreu in die Brillenfassung ein- oder angearbeitet. Hierdurch wird eine Brille geschaffen, bei der die beste aus dem Gewicht der Brille resultierende Druckverteilung auf dem Nasenrücken erzielt wird, indem der Nasenrücken in die Brille "eingebettet" ist. Der Nasensteg der erfindungsgemäßen Brille stellt das "Negativ" der "positiven Nase" dar.

Ein Ausführungsbeispiel der Erfindung ist in der Zeichnung dargestellt und wird im folgenden näher erläutert. Es zeigen:

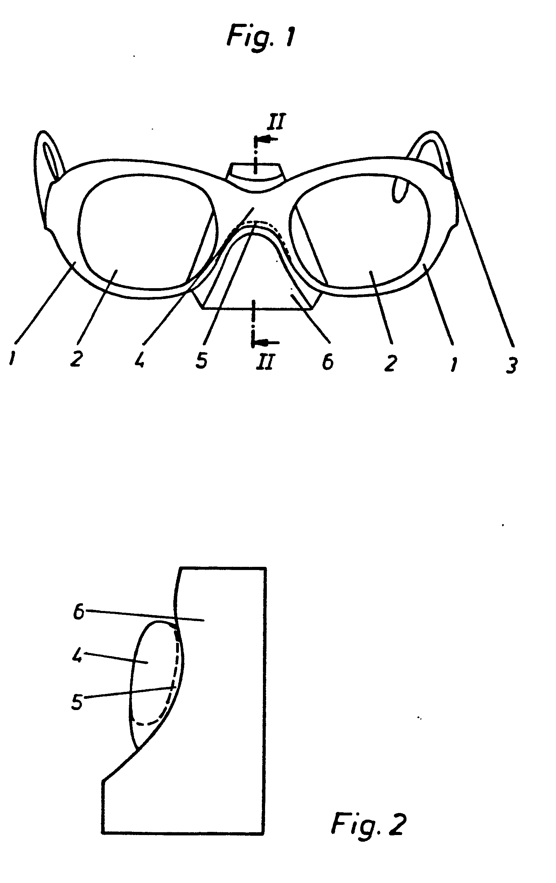

Fig. 1 die Ansicht von vorne auf eine Brille gemäß der Erfindung und

Fig. 2 den Schnitt II-II nach Fig. 1.

Die Brille weist ein vorgefertigtes Gestell mit zwei Einfassungen 1 auf, die die Gläser 2 umgeben. An den Einfassungen 1 sind über Scharniere Bügel 3 befestigt. Die Einfassungen 1 sind über einen Nasensteg 4 miteinander verbunden.

Auf dem Nasensteg 4 ist eine zusätzliche Lage 5 aus einem Kunststoff aufgebracht, der sich mit dem Werkstoff des Brillengestelles verbindet. In der Zeichnung ist diese Lage 5 durch die Fläche erkenntlich, die zwischen dem gestrichelten Linienzug und der Außenkontur des Nasensteges 4 sich befindet, die der Nase zugewandt ist. Diese Außenkontur ist der Form des Nasenrücken des Brillenträgers angepaßt. Die zusätzliche Lage 5 wird auf die nachfolgend beschriebenen Weise mit Hilfe eines Modelles 6 hergestellt, das dem betreffenden Nasenrücken entspricht.

Auf dem Nasenrücken der fehlsichtigen Person wird eine entsprechende Menge einer plastischen, aushärtbaren Abformmasse verteilt. Danach wird die Brille in der optimalen Position aufgesetzt. Als Abformmasse wird vorzugsweise eine Silikonknetmasse mit einem Härterzusatz verwendet, durch den in wenigen Minuten eine stabile Form erhalten wird. Die Brille verbleibt bis zum Aushärten der Abformmasse auf der Nase, was etwa eine Zeit von zwei bis drei Minuten in Anspruch nimmt.

Die Brille wird abgenommen, und die Gläser 2 und die Bügel 3 werden von dem Gestell entfernt. Der Nasensteg 4 wird zusammen mit der ausgehärteten Abformmasse in Gips eingebettet. Auf diese Weise entsteht ein präzises Modell 6, das den Nasenrücken der Person im Bereich des Nasensteges wiedergibt. Nach der Beschneidung und Aushärtung des Modells wird die Brille abgehoben und die Abformmasse von dem Nasensteg entfernt.

Die Brille wird auf dem Modell 6, zum Beispiel mit Hilfe von Wachs fixiert. Der durch die Entfernung der ausgehärteten Abformmasse entstandene Hohlraum zwischen dem Nasensteg 4 und dem Modell 6 wird mit Kunststoff ausgefüllt. Als Kunststoff wird bevorzugt ein auch im Bereich der Zahntechnik eingesetzter Zwei-Komponenten-Kunststoff verwendet, der in Fließ- oder Streutechnik verarbeitbar ist. Das Brillengestell mit dem auf den Nasensteg 4 aufgebrachten Kunststoff wird in einen Überdrucktopf eingesetzt, in welchem der Kunststoff mit Hilfe von warmen Wasser bei vorzugsweise 2,2 bis 2,5 bar zur Polymerisation gebracht wird. Auf diese Weise ist an dem Nasensteg 4 ein individuelles Nasenbett eingearbeitet.

## Patentansprüche

1. Verfahren zum Anpassen einer Brille an die Nasenform einer Person, bei dem der Nasenrücken abgeformt wird, indem bei aufgesetzter Brille der verbleibende Hohlraum zwischen dem Nasensteg der Brille und dem Nasenrücken mit einer plastischen, aushärtbaren Masse ausgefüllt wird, dadurch gekennzeichnet, daß der Nasensteg zusammen mit der ausgehärteten Masse zur Bildung eines Modelles in Gips eingebettet wird und daß nach dem Entfernen der Abformmasse der so entstandene Hohlraum zwischen dem Nasensteg und dem Modell mit einem aushärtbaren und sich mit dem Brillenwerkstoff verbindenden Kunststoff ausgefüllt wird.

2. Verfahren nach Anspruch 1, dadurch gekennzeichnet, daß die Masse auf dem Nasenrücken verteilt wird und daß danach die Brille in der optimalen Position aufgesetzt wird.

3. Verfahren nach Anspruch 1 oder den Ansprüchen 1 und 2, dadurch gekennzeichnet, daß nach dem Aushärten der Masse und dem Absetzen der Brille die Gläser und die Bügel von der Brille entfernt werden.

4. Verfahren nach einem oder mehreren der Ansprüche 1 bis 3, dadurch gekennzeichnet, daß die Brille ohne die Gläser und die Bügel zusammen mit dem angeformten Kunststoff einer Wärmebehandlung bei erhöhtem Druck unterworfen wird.

## Claims

1. Process for adjusting spectacles to the nose shape of a person in which the nose bridge is moulded by filling the cavity remaining between the bridge of the spectacles placed on the nose and the nose bridge with a plastic curable compound, characterized in that the spectacle bridge along with the curable compound is embedded in plaster to form a pattern and that after removal of the moulding compound the cavity thus formed between the spectacle bridge and pattern is filled with a curable plastic bonding to the spectacle frame material.

2. Process according to Claim 1, characterized in that the compound is spread on the nose bridge and then the spectacles are put on, placing them in optimum position.

3. Process according to Claim 1 or Claims 1 and 2, characterized in that after curing of the compound and taking-off of the spectacles the lenses and sidepieces are removed from the spectacle frame.

4. Process according to one or several of Claims 1 to 3, characterized in that the spectacle frame without lenses and sidepieces together with the plastic bonded to the spectacle frame is subjected to a heat treatment at elevated pressure.

## Revendications

1. Procédé d'adaptation d'une paire de lunettes à la forme du nez d'une personne par moulage du dos nasal, l'espave vide existant, lorsque les lunettes sont en place, entre l'arcade de la monture de lunettes et le dos nasal étant rempli d'une pâte plastique thermodurcissable caractérisé par le fait que l'arcade de la monture et la pâte polymérisée sont enrobées de plâtre pour la formation d'une empreinte et qu'après enlèvement de la pâte de modelage, l'espace vide ainsi créé entre l'arcade de la monture et l'empreinte est rempli d'une matière synthétique thermodurcissable se liant au matériau dans lequel est fabriquée la monture.

2. Procédé selon la revendication 1, caractérisé en ce que la pâte est répartie sur le dos nasal, puis la monture mise en place dans sa position optimale.

3. Procédé selon la revendication 1 ou les revendications 1 et 2, caractérisé en ce qu'après durcissement de la pâte et retrait de la paire de lunettes, les verres et les branches de celle-ci sont enlevées.

4. Procédé selon l'une quelconque des revendications 1 à 3, caractérisé en ce que la monture, après enlèvement des verres et des branches est soumise avec la matière synthétique modelée à un traitement thermique sous pression.

## Fig. 1

## Fig. 2